# EUROPEAN PATENT APPLICATION

(11) **EP 0 728 662 A2**
(43) Date of publication of application: **28.08.1996**
(21) Application number: 96102771.1
(22) Date of filing: 23.02.1996
(51) Int. Cl.: B62M 23/02

(54) **Battery holding device for vehicle**

(30) Priority: 23.02.1995 JP 35573/95
(71) Applicant: YAMAHA HATSUDOKI KABUSHIKI KAISHA, Iwata-shi Shizuoka-ken, 438 (JP)
(72) Inventor: Suzuki, Masahiro, c/o Yamaha Hatsudoki K.K., Iwata-shi, Shizuoka-ken (JP); Takata, Nozomu, c/o Yamaha Hatsudoki K.K., Iwata-shi, Shizuoka-ken (JP)
(74) Representative: Grünecker, Kinkeldey, Stockmair & Schwanhäusser Anwaltssozietät

(57) **Abstract**

A battery holding device for a vehicle in particular a power-assisted bicycle comprises an outer box adapted to be secured to said vehicle and electrically connectable to a power unit of said vehicle. Further, an inner box is adapted to accommodate at least one battery and being insertable into said outer box. The battery holding device in addition is provided with an urging mechanism for urging said inserted inner box against said outer box for maintaining an electrical contact between said boxes.

## Description

This invention relates to a battery holding device for a vehicle in particular a power-assisted bicycle, comprising an outer box adapted to be secured to said vehicle and electrically connectable to a power unit of said vehicle, an inner box adapted to accommodate at least one battery, said inner box being insertable into said outer box.

In vehicles such as a motor-assisted bicycle in which it is difficult to charge the battery while the vehicle is driven, the battery is to be charged frequently through a charger connected to a household outlet during the vehicle is not used. In view of such frequent requirements for charging, an arrangement is preferable in which the battery is detachable from the vehicle so that the vehicle itself need not be moved to the vicinity of the charger every time of charging.

Therefore, a battery holding device has been proposed in which the entire battery case holding the battery may be removed from the vehicle.

When the battery case is made detachable from the vehicle as in the conventional arrangement, a structure is preferable in which the battery held in the battery case is automatically connected electrically to the motor drive circuit on the vehicle side when the battery case is installed in the vehicle. Depending on the structure of such a connection, however, the connection terminals may he exposed outside when the battery case is removed from the vehicle and there is concern that the terminals may be contaminated by the elements resulting in electric connection troubles, or may be damaged by tampering.

In order to solve the above problem, there has been proposed a battery holding device with an outer box secured on the vehicle side, and an inner box holding a battery and capable of being freely inserted into or taken out from the outer box. This makes it possible to arrange a connection mechanism in the outer box and to eliminate the above problems of deterioration in the electric connection function due to exposure to the elements or damages due to tampering.

Such a battery holding device is known from the European patent application no. 95 118 231.0 filed on November 20, 1995, being a prior art document according to Article 54(3) EPC.

When a structure is employed in which the inner box is held in the outer box, it is necessary that the battery held in the inner box can be electrically reliably connected to the motor drive circuit arranged on the outer box side and that the inner box can be mechanically and reliably secured without requiring complicated handling.

In addition, if the storage room of said vehicle is provided with a charger the removal of the inner box for charging said battery may be seen as unnecessary work.

Accordingly, it is an objective of the present invention to provide an improved battery holding device as indicated above which always assures an operational reliability and is easy to handle.

According to the invention, this objective is solved for a battery holding device as indicated above by an urging mechanism for urging said inserted inner box against said outer box for maintaining an electrically contact between said outer and inner boxes.

According to the invention, this objective is further solved for a battery holding device as indicated above in that said inner box comprises a charge terminal being accessible when said inner box is inserted into said outer box for recharging said at least one battery.

According to the invention, the urging mechanism always assures a reliable electrical connection between the inner and outer boxes, when said inner box is inserted into said outer box.

Further, according to the invention the charge terminal provided in said inner box and being accessible even when said inner box is inserted into said outer box allows the recharging of said battery regardless of whether said inner box is inserted or not.

According to an embodiment of the invention, said outer box comprises a selectively closable charge opening aligned with said charge terminal when said inner box is inserted into said outer box. In this case, it is advantageous when said charge terminal is fixed to the inside of said inner box and faces outside through an opening provided in said inner box.

According to another embodiment of the invention, said charge terminal is connected to respective poles of said battery by two charge leads whereby it is advantageous when one of said two charge leads is provided with a diode to prevent short circuit as well as an unauthorized draw current.

In order to ease the handling of said urging mechanism, it is advantageous when said outer box comprises a lid and that said urging mechanism is fixed to said lid.

The handling of said battery holding device is further improved in that said urging mechanism comprises a slide ring biased by a spring, whereby said slide ring may be guided by a guide rod.

According to still another embodiment of the invention, said inner box comprises a pivotable handle and said handle is placeable between said urging mechanism and said inner box.

In order to prevent an insertion of the inner box with an improper orientation, it is advantageous when a pivot axis of said handle is offset by a distance of a center line of said inner box, whereby it is possible that said handle comprises two short side portions one end of each is fastened to said pivot axis whereby the other ends are connected by a longer side portion and that the lengths of each short side may correspond to the distance from the outer side wall of said inner box to said center line plus said offset distance.

The prevention of a complete insertion with an improper orientation may be further enhanced in that said outer box and said inner box comprising means only allowing a complete insertion with a proper orientation.

A correct insertion of said inner box into said outer box may be further enhanced in that said lid is pivotably linked to a lid pivot axis and that said urging mechanism is positioned between said center line of said inner box and said lid pivot axis, whereby it is in addition possible that said lid comprises a lock cylinder, wherein the length of said lock cylinder may be larger than the length of said urging mechanism so that it is only possible to close said lid when said handle is folded to the side of said urging mechanism to leave enough empty space for said lock cylinder.

Other preferred embodiments of the present invention are laid down in further dependent claims.

When the phrase "substantially in the direction of making electric connection" is used in this invention, it refers not only the case in which the urging direction is in agreement with the direction of making electric connection but also the case in which the urging direction is changed by interposing an urging force direction changing cam mechanism or the like between the inner box and the outer box as long as the changed urging direction is in agreement with the direction of making electric connection.

With the battery holding device for vehicles according to an embodiment, since the inner box holding the battery is held in the outer box secured to the vehicle so that the inner box can be freely put into or taken out from the outer box, the inner box may be removed from the vehicle for charging the battery by easy handling. Furthermore, since the connection mechanism is disposed within the outer box with the lid, the connection mechanism is not exposed outside even when the inner box is taken out so that the electric connection function is prevented from deteriorating due to exposure to the elements and damages due to tampering is avoided.

Furthermore, since electric connection is automatically made between the inner box and the outer box when the inner box is held in the outer box, and since an urging mechanism urges the inner box to the direction of making electric connection when the lid is closed, both electric connection and mechanical securing are made with a simple handling.

With the battery holding device for vehicles according to another embodiment, since the top wall of the inner box is provided with the handle, handling of the inner box into and out of the outer box is easy. Since the handle is made foldable, increase in the size of the outer box due to the accommodation space for the handle is minimized.

When the lid is closed, the urging mechanism presses the folded handle which in turn presses the inner box to make the electric connection reliable so that a single urging mechanism mechanically secures both the inner box and the handle, and noise is prevented from being produced.

In the following, the present invention is explained in greater detail with respect to several embodiments thereof in conjunction with the accompanying drawings, wherein:
Figure 1 is a right side view of a power-assisted bicycle provided with a battery holding device embodiment;
Figure 2 is a left side view of an outer box of the above embodiment;
Figure 3 is a front elevation view of the outer box of the above embodiment;
Figure 4 is a right side view of the inner box of the above embodiment;
Figure 5a is a right side view of the inner box of the above embodiment;
Figure 5b is an equivalent circuit of the inner box according to figure 5a;
Figure 6 is a left side view of the inner box of the above embodiment, partially in cross-section;
Figure 7 shows a cross-section taken along the lines VII-VII in figure 4;
Figure 8 is a plan view of the outer box of the above embodiment;
Figure 9 shows a cross-section taken along the lines IX-IX in figure 8; and
Figure 10 shows a cross section taken along the lines X-X in figure 3.

An embodiment of this invention will be hereinafter described in reference to the appended drawings.

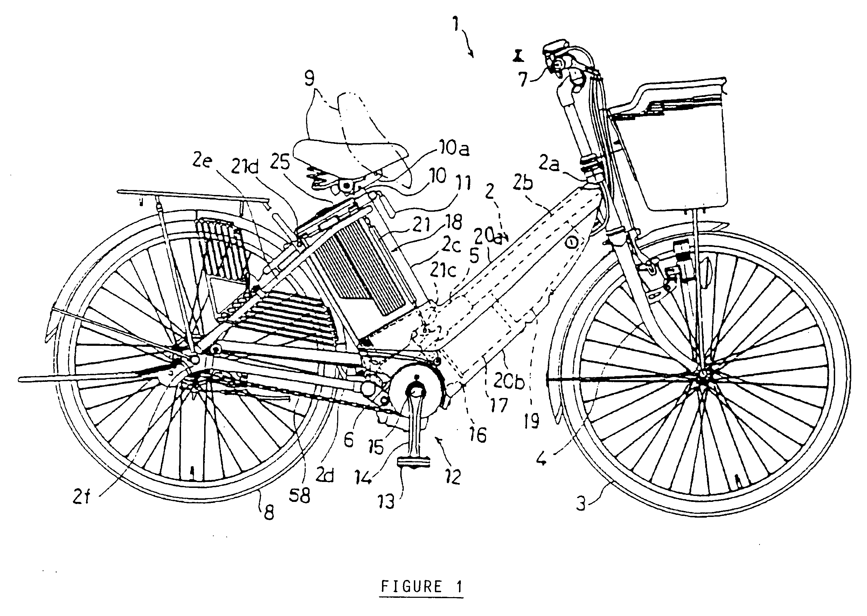

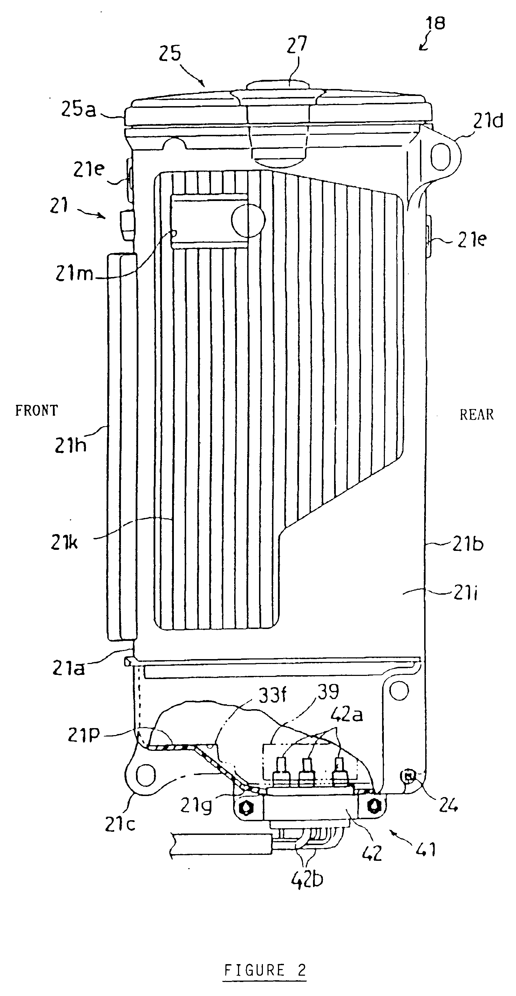

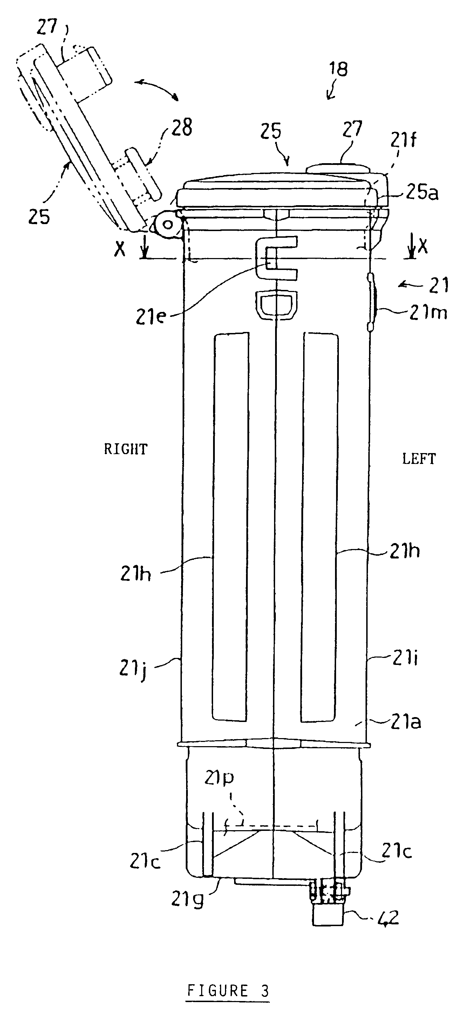

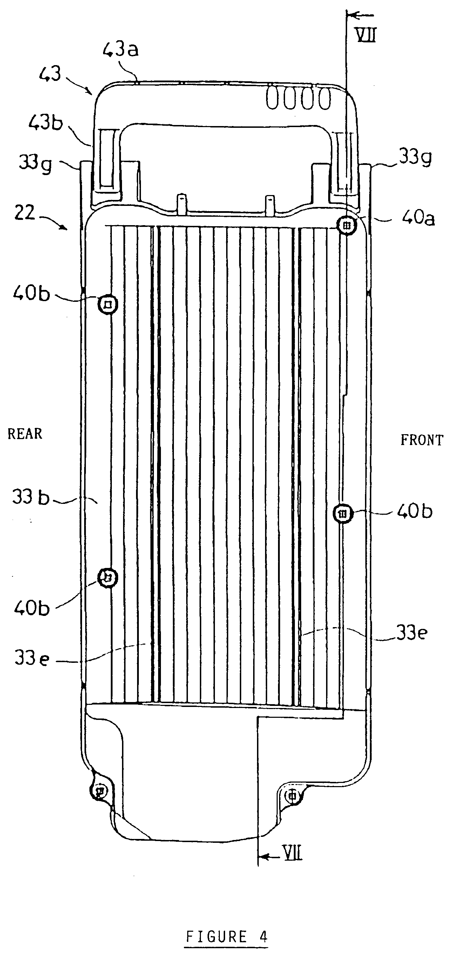

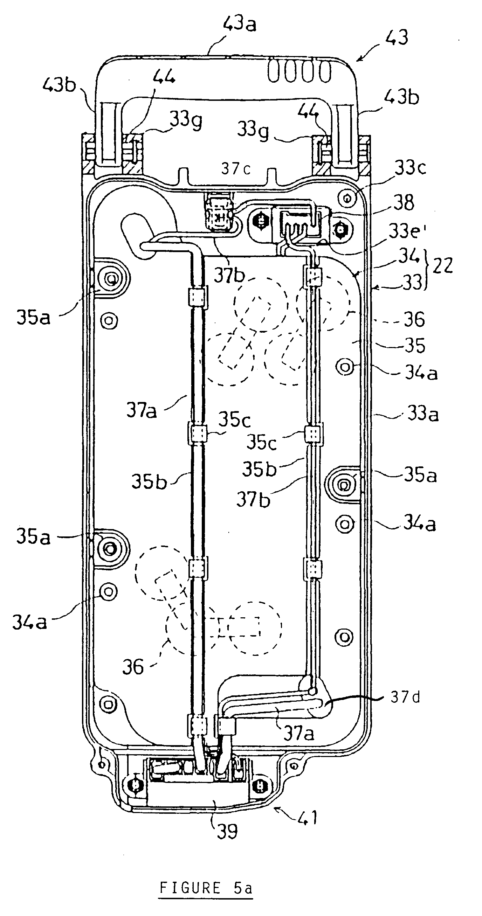

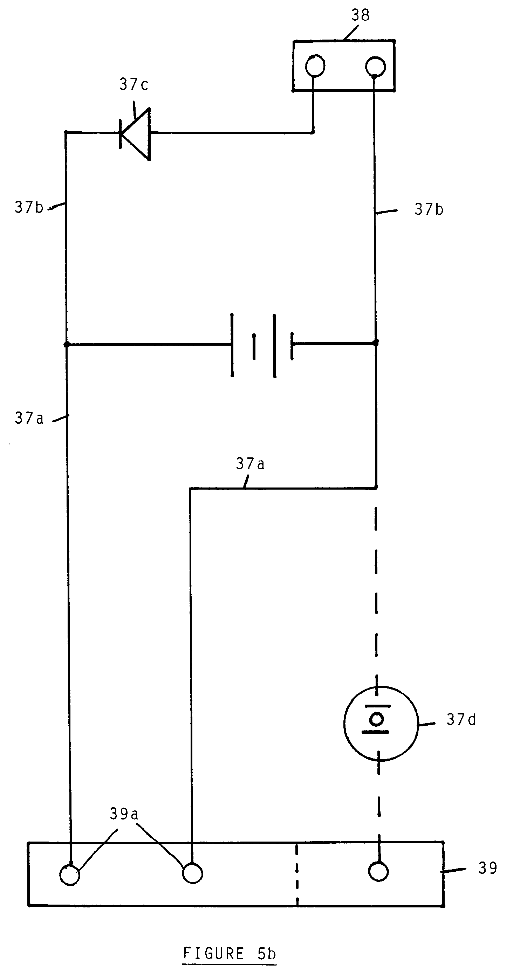

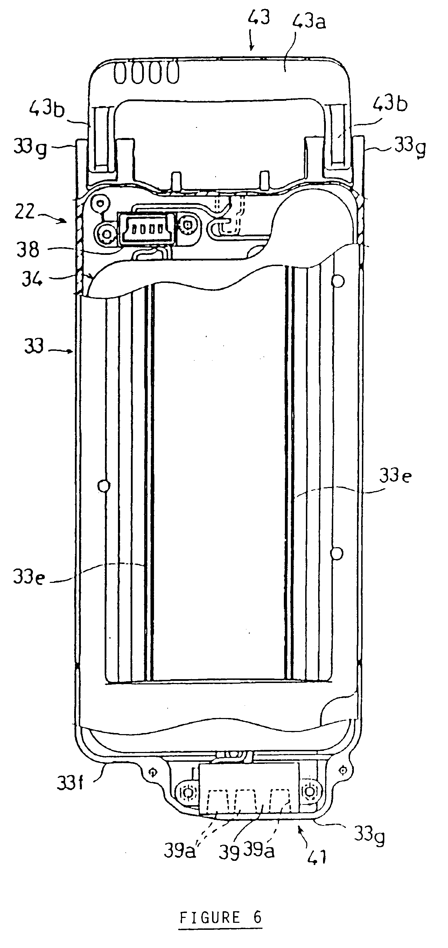

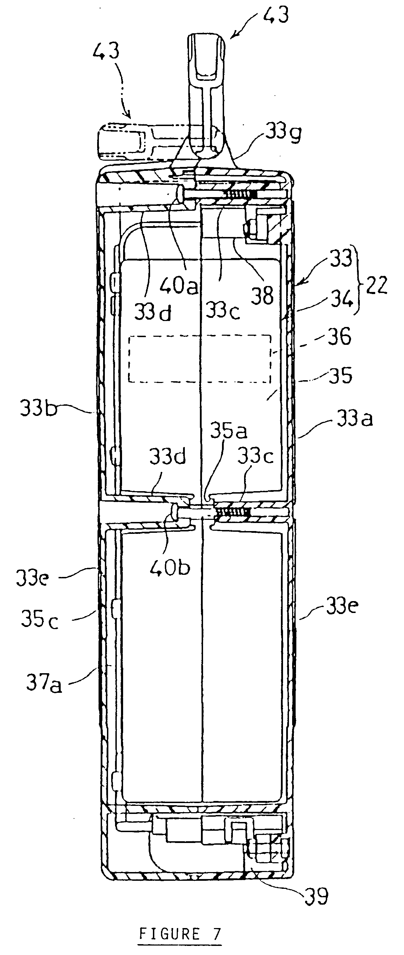

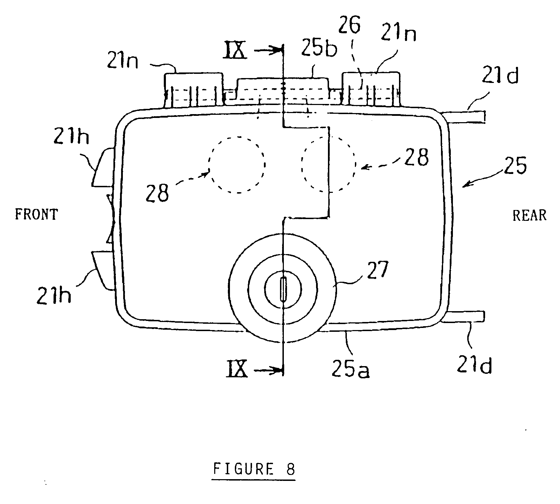

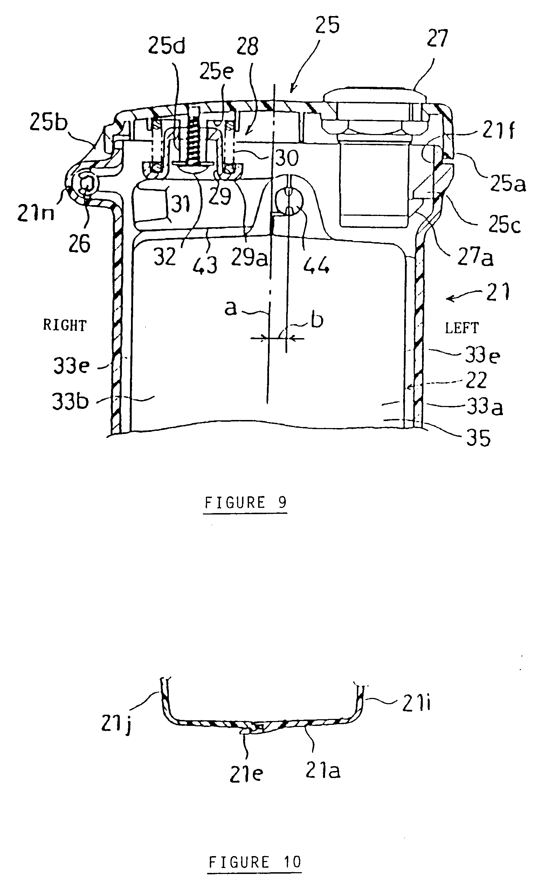

FIGs. 1 - 10 are explanatory drawings for describing a battery holding device for a power-assisted bicycle as an embodiment of this invention. FIG. 1 is a right side view of the power-assisted bicycle. FIG. 2 is a left side view and FIG. 3 is a front elevation of the outer box. FIG. 4 is a right side view of the inner box. FIG. 5 is a right side view of the inner box with its side cover removed. FIG. 6 is a left side view of the inner box partially broken away. FIG. 7 is a cross-sectional front elevation of the inner box. FIG. 8 is a plan view of the outer box. FIG. 9 is a cross-sectional front elevation of the lid and its vicinity of the outer box. FIG. 10 is a cross-sectional plan view of the outer box in two-piece structure. The words "right" and "left" in this embodiment refer to those as seen from the rider.

In the drawings are shown a power-assisted bicycle 1 provided with the embodiment device. A vehicle frame 2 of the bicycle 1 comprises; a front wheel 3 rotatably supported with a front fork 4 which in turn is rotatably supported with a head pipe 2a , a down tube 2b extending from the head pipe 2a obliquely rear downward, a seat tube 2c connected to the lower portion of the down tube 2b through a center lug 5 so as to form a V shape, paired right and left chain stays 2d connected to the lower end of the down tube 2b through a hanger lug 6 , and paired right and left seat stays 2e connected to the upper portion of the seat tube 2c and to the rear end portion of the chain stay 2d , with the seat tube 2c , the chain stays 2d and the seat stays 2e generally forming a triangular form. The chain stays 2d and the seat stays 2e are connected through a rear wheel bracket 2f to each other. The rear wheel bracket 2f supports a rear wheel 8 for rotation.

Steering handlebars 7 are attached to the upper end of the front fork 4 . A saddle 9 is attached to a seat pillar tube 10 inserted, for extension and contraction, into the upper end of the seat tube 2c . The seat pillar tube 10 can be fixed to a required height with a lock handle 11 provided on the upper end of the seat tube 2c .

The saddle 9 is attached to the end of a bracket 10a secured for rotation to the upper end of the seat pillar tube 10 . When the battery is to be removed as will be described later, the saddle 9 may be rotated upward to avoid interference with the battery.

A power unit 12 is disposed below the center lug 5 . The power unit (12) is a device for combining the pedal force inputted from pedals 13 through a crank 14 to a crankshaft 15 with a drive force of an assist drive device 16 and transmitting the combined force to the rear wheel 8 through a chain 58 .

The assist drive device 16 comprises; an electric motor 17 for outputting the drive force, a battery holding device 18 for holding the battery as a power source for the electric motor 17 , and a controller 19 for controlling the drive force of the electric motor 17 to a value commensurate with the pedal force.

The electric motor 17 and the controller 19 are disposed under and along the down tube 2b . The down tube 2b , the center lug 5 , and the hanger lug 6 are surrounded with an upper cover 20a and a lower cover 20b .

The battery holding device 18 is disposed behind and along the seat tube 2c in a double case structure in which the battery is held in an inner box 22 which can be freely inserted into or taken out of an outer box 21 . Paired right and left flanges 21c are provided in the lower end portion of the front wall 21a of the outer box 21 . Paired right and left flanges 21d are provided in the upper end portion of the rear wall 21b of the outer box 21 . The flanges 21c and 21d are secured with bolts to a vehicle frame 2 .

The outer box 21 is made up of right and left pieces of plastic material in a generally rectangular box with an insertion opening 21f on its upper end and with a bottom wall 21g on its lower end, and secured by hook-stopping engagement stop lugs 21e formed on the upper portions of front and rear walls 21a and 21b , and by securing the lower end portion with a bolt 24 .

The front wall 21a of the outer box 21 is formed with an engagement stop piece 21h extending in tip and down directions for engagement with the seat tube 2c . The right and left walls 21i and 21j are formed with a design pattern 21k for improving appearance. A charge opening 21m is for inserting a charge plug while the inner box 22 is held in position.

The front portion of the bottom wall 21g of the outer box 21 is sloped up forward to have a step 21p which is a step higher than the other portion. The step portion 21p is for supporting the weight of the inner box 22 . The bottom wall 21g is also provided with a male connector 42 constituting part of a connection mechanism 41 for connecting the battery to the drive circuit. The male connector 42 is secured to a boss portion formed on the outer surface of the bottom wall 21g with a bolt, with its male terminals 42a projecting toward the inside of the bottom wall 21g , and with the male terminals 42a connected through leads 42b to the electric motor 17 , the controller 19 , and others.

The upper end of the outer box 21 is provided with a lid 25 for opening and closing the insertion hole 21f . The lid 25 is of a dish shape with its periphery having a flange 25a bent downward. A boss portion 25b formed on the right side wall of the flange 25a is rotatably supported on the right side of the vehicle with a support pin 26 inserted between boss portions 21n formed at the upper end of the right side wall 21j of the outer box 21 .

A lock cylinder 27 is secured to the inner left side or toward the end of the lid 25 so as to be engaged with or disengaged from an engagement stop piece 25c formed to project from the inside surface of the flange 25a of the lid 25 by inserting a key switch into the lock cylinder 27 and rotating the engagement claw 27a .

Two sets of urging mechanisms 28 are disposed on the inside right side or on the rotary shaft side of the of the lid 25 . Each of the urging mechanisms 28 is of a structure in which a slide ring 29 is attached for up and down movement to a guide rod 25d formed to project downward from the inside surface of the lid 25 , and a spring 30 is interposed between a pressing flange 29a of the slide ring 29 and a spring seat 25e of the lid 25 . A stopper 31 is for restricting the lowering position of the slide ring 29 and secured with a screw 32 to the lower end surface of the guide rod 25d .

According to figures 5a and 5b, the inner box 22 is of a structure in which a battery pack 34 is held in a box body 33 . The battery pack 34 is of a structure in which a plural number of chargeable unit batteries 36 are connected in series to form a battery group which is disposed in the vehicle width direction in a holding case 35 made up of right and left split pieces of plastic material, and the split pieces are connected together using a pin 34a . Discharge leads 37a and charge leads 37b respectively connected to the negative and positive poles of the battery group are routed in lead grooves 35b recess-formed on the outside surface of the holding case 35 and held down with holding claws 35c . The charge lead 37b is led up and connected to a charge connection terminal 38 while the discharge lead 37a is led down and connected to a female connector 39 which constitutes part of the connection mechanism 41 .

The other charge lead 37b is connected to one of the negative and positive poles and is provided with a diode 37c to prevent a short circuit as well as an unauthorized draw current.

As is apparent from figure 5b, said inner box in addition is provided with a bimetal switch 37d for assuring a correct battery temperature.

The box body 33 is made up of right and left split pieces, or a bottom case 33a and a lid case 33b , of plastic material. The battery pack 34 is received in the bottom case 33a , which is covered with the lid case 33b , and boss portions 33c and 33d are secured with bolts 40a and 40b . Here, the boss portions 33c and 33d through which the bolt 40b penetrates also tightens a securing flange 35a formed on the battery pack 34 so that the battery pack 34 is prevented from moving within the box body 33 .

The bottom case 33a and the lid case 33b of the box body 33 are provided with ribs 33e extending in the up and down directions and coming into contact with the inside surface of the outer box 21 so that the inner box 22 is prevented from moving within the outer box 21 .

The bottom wall of the box body 33 is formed with a step portion 33f of a height corresponding to the step portion 21p of the outer box 21 so that the step portion 33f is in contact with the step portion 21p in the state of the inner box 22 being held in the outer box 21 and that the weight of the inner box 22 is supported by the step portion 21p and the connection mechanism 41 is protected from being subjected to an excessive load.

The charge connection terminal 38 is secured with a bolt to the inside surface of the bottom case 33a and faces outside through the opening 33e' of the bottom case 33a so as to be connected to a charge plug of a charger through the charge opening 21m of the outer box 21 .

The female connector 39 is disposed at a downward projecting portion 33g of the bottom wall of the box body 33 and secured to the bottom case 33a side. A female terminal 39a of the female connector 39 faces outside so that the female terminal 39a automatically comes into contact with the male terminal 42a when the inner box 22 is held in the outer box 21 . The female and male terminals 39a and 42a are constituted to maintain the contact state even if the inner box 22 vibrates up and down to some extent within the outer box 21 .

The top wall of the inner box 22 is provided with a handle 43 in a foldable manner. The handle 43 is generally of a U shape with its long side portion 43a curved on its both ends to form short side portions 43b . The short side portions 43b are supported for swinging with a support pin 44 passed through a boss portion 33g formed on the top wall of the box body 33 .

The support pin 44 is displaced by a distance b toward the left from the width center line a of the inner box 22 . The height of the handle 43 is set so that, when the handle 43 is folded, the end of the long side portion 43a is flush with the right side surface of the inner box 22 (Refer to the dash-and-double-dotted phantom lines in FIG. 7). When the handle 43 is folded in the specified direction as shown in FIG. 7, the inner box 22 is pressed by the urging mechanism 28 through the handle 43 .

Function and effect of this embodiment will be hereinafter described.
In order to charge the battery of the power-assisted bicycle 1 provided with the battery holding device 18 of this embodiment, the saddle (9) is rotated to the phantom line position in FIG. 1, and a key switch is inserted in the lock cylinder 27 of the outer box 21 to unlock. Then, the spring 30 of the urging mechanism 28 extends to slightly lift the lid 25 . The lid 25 is opened to the phantom line position in FIG. 3 and the inner box 22 is gripped by the handle 43 and taken out. The inner box 22 is brought to a place where a charger is located and a charge plug of the charger is connected to the charge terminal 38 . In the case the battery is charged while it is on the bicycle 1 , the charge plug may be connected to the charge terminal 38 through the charge opening 21m of the outer box 21 .

When the charging is over, the inner box 22 may be inserted into the outer box 21 through the insertion opening 21f . Then, the female connector 39 disposed on the bottom surface of the inner box 22 is automatically connected to the male connector 42 disposed on the bottom surface of the outer box 21 . The weight of the inner box 22 is supported by the contact between the step portion 21p of the outer box 21 and the step portion 33f of the inner box 22 so that the male and female connectors 42 and 38 are protected from being subjected to an excessive load.

When the inner box 22 is inserted in a wrong direction by mistake, the projecting portion 33g located lower than the step portion 33f of the bottom wall of the inner box 22 butts against th step portion 21p of the outer box 21 so that the insertion error is immediately noticed.

When the handle 43 is folded to the position as shown in FIG. 7 and then the lid 25 is closed, the pressing flange 29a of the slide ring 29 of the urging mechanism 28 exerts an urging force of the spring 30 on the handle 43 . This secures the electric connection by the connection mechanism 41 , secures the inner box 22 reliably to the outer box 21 , and secures the handle 43 reliably to the inner box 22 .

Here, if the handle is folded in the opposite direction to that shown in FIG. 7, the pressing by the urging mechanism becomes impossible. However, the handle 43 folded in the opposite direction interferes with the opening of the outer box 21 and the lid 25 cannot be closed. Therefore, such a problem will not occur.

In this embodiment, since the urging mechanism 28 is disposed near to the rotary shaft of the lid 25 , and the lock cylinder 27 is disposed apart from the rotary shaft of the lid 25 , a small force suffices for closing the lid 25 to facilitate handling also in this regard.

To restrict the rotating direction of the handle 43 in the above embodiment the handle 43 is displaced from the center line a of the inner box 22 and the height of the handle 43 is set so that its end is flush with the side surface of the inner box 22 . However, the handle 43 may also be urged by a spring or the like to return the handle 43 to the normal position.

As described above, with the battery holding device for vehicles according to an embodiment since the inner box holding a battery is held, to be freely taken out, in the outer box, effects are obtained that the inner box may be removed from the vehicle when charging the battery to facilitate handling for charging. Furthermore, since the connection mechanism is provided within the outer box with the lid, the connection mechanism is not exposed outside even when the inner box is removed so that the electric connection function is prevented from deteriorating due to exposure to the elements and damages due to tampering is avoided.

Furthermore, since it is arranged that the electric connection is automatically made when the inner box is inserted into th outer box, and that the urging mechanism urges the inner box in the direction of making electric connection when the lid is closed, both electric connection and mechanical securing of the inner box are simultaneously made with a simple operation.

According to another embodiment , since the handle is disposed on the top wall of the inner box, the inner box can be easily inserted into and taken out of the outer box. Furthermore, since the handle is made foldable, the size of the outer box is prevented from increasing due to the space for stowing the handle.

Still another effect is that, when the lid is closed, the urging mechanism presses the folded handle, and the handle presses the inner box so that both the inner box and the handle are mechanically secured with a single urging mechanism, and noise due to vibration of the inner box or the handle is prevented.

## Claims

1. A battery holding device for a vehicle in particular a power-assisted bicycle (1), comprising an outer box (21) adapted to be secured to said vehicle and electrically connectable to a power unit (17) of said vehicle, an inner box (22) adapted to accommodate at least one battery (36), said inner box (22) being insertable into said outer box (21), **characterized by** an urging mechanism (28) for urging said inserted inner box (22) against said outer box (21) for maintaining an electrically contact between said outer and inner boxes (21, 22).

2. A battery holding device for a vehicle in particular a power-assisted bicycle (1), comprising an outer box (21) adapted to be secured to said vehicle and electrically connectable to a power unit (17) of said vehicle, an inner box (22) adapted to accommodate at least one battery (36), said inner box (22) being insertable into said outer box (21), **characterized in that**, said inner box (22) comprises a charge terminal (38) being accessable when said inner box (22) is inserted into said outer box (21) for recharging said at least one battery (36).

3. A battery holding device according to claim 2, **characterized by** an urging mechanism (28) for urging said inserted inner box (22) against said outer box (21) for maintaining an electrically contact between said outer and inner boxes (21, 22).

4. A battery holding device as claimed in claims 2 or 3 **characterized in that** said outer box (21) comprises a selectively closable charge opening (21m) aligned with said charge terminal (38) when said inner box (22) is inserted into said outer box (21) for recharging said at least one battery (36) without removing said inner box (22) from said outer box (21).

5. A battery holding device as claimed in at least one of claims 2 to 4 **characterized in that** said charge terminal (38) is fixed to the inside of said inner box (22) and faces outside through an opening (33e) provided in said inner box (22).

6. A battery holding device according to at least one of the preceding claims 2 to 5, **characterized in that** said charge terminal (38) is connected to the respective poles of said battery (36) by two charge leads (37b).

7. A battery holding device according to claim 6, **characterized in that** one of said two charge leads (37b) is provided with a diode (37c) to prevent a short circuit as well as an unauthorised draw current.

8. A battery holding device according to at least one of the preceding claims 1 to 7, **characterized in that** said outer box (21) comprises a lid (25) and that said urging mechanism (28) is fixed to said lid (25).

9. A battery holding device according to at least one of the preceding claims 1 to 8, **characterized in that** said urging mechanism (28) comprises a slide ring (29) biased by a spring (30).

10. A battery holding device according to claim 9, **characterized in that** said slide ring (29) is guided by a guide rod (29d).

11. A battery holding device according to at least one of claims 1 to 10, **characterized in that** said inner box (22) comprises a pivotable handle (43) and that said handle (43) is placable between said urging mechanism (28) and said inner box (22).

12. A battery holding device according to claim 11, **characterized in that** a pivot axis (pin 44) of said handle (43) is offset by a distance (b) of a center line (a) of said inner box (22).

13. A battery holding device according to claim 11 or 12, **characterized in that** said handle (43) comprises two short side portions (43b) one end of each is fastened to a pivot axis (pin 44) whereby the other ends are connected by a long side portion (43a).

14. A battery holding device according to claim 13, **characterized in that** the lengths of each short side portion (43b) correspond to the distance from the outer side wall of said inner box (22) to said center line (a) plus said offset distance (b).

15. A battery holding device according to at least one of claims 8 to 14, **characterized in that** said lid (25) is pivotably linked to a lid pivot axis (support pin 26) and that said urging mechanism (28) is positioned between said center line (a) of said inner box (22) and said lid pivot axis (26).

16. A battery holding device according to at least one of claims 1 to 15, **characterized in that** two identical urging mechanisms (28) are provided.

17. A battery holding device according to claim 15 or 16, **characterized in that** said lid (25) comprises a lock cylinder (27).

18. A battery holding device according to claim 17, **characterized in that** the length of said lock cylinder (27) is larger than the length of said urging mechanism (28).

19. A battery holding device according to at least one of claims 8 to 18, **characterized in that** said outer box (21) has a rectangularly shaped cross-section and that said lid (25) is linked along a longer side at the top of said outer box (21).

20. A battery holding device according to at least one of claims 8 to 19, **characterized in that** the inner bottom wall of said outer box (21) is provided with electrical connectors (42a) capable of cooperating with respective electrical connectors (39a) provided at the outer bottom wall of said inner box (22).

21. A battery holding device according to at least one of claims 1 to 20, **characterized in that** said outer box (21) and said inner box (22) comprising means (21p; 33f) preventing a complete insertion of the inner box (22) with an improper orientation.

22. A battery holding device according to at least one of claims 1 to 21, **characterized in that** the vehicle is a motor-assisted bicycle (1) comprising a cover (20) over a main or down tube (26), said cover (20) comprising an upper cover (20a) and a lower cover (20b), said upper cover (20a) covering the down tube (2b), a lower portion of a seat tube (2c) and a lower portion of the outer box (21), while the lower cover (20b) covers an electric motor (17) and a casing of a controller (19).
